# EUROPEAN PATENT APPLICATION

(11) **EP 4 783 399 A1**
(43) Date of publication of application: **29.07.2026**
(21) Application number: 25153982.1
(22) Date of filing: 25.01.2025
(51) Int. Cl.: H02J 3/28, F02C 6/16, H02J 3/30, H02J 15/00

(54) **ENERGY HANDLING OF DC ELECTRICAL ENERGY SOURCES**

(71) Applicant: KilianNRGS, 8200 Sint-Michiels Brugge (BE)
(72) Inventor: DE LILLE, Kilian, 8200 Sint-Michiels Brugge (BE)
(74) Representative: Winger

(57) **Abstract**

An energy handling system (100) comprises a DC motor/generator (210) for converting between DC electrical energy and mechanical energy, and a compressed air energy storage equipment (220) for converting between mechanical energy and compressed air using energy exchange units based on a flexible fluid container in a vessel. A controller (230) is configured for converting DC electrical energy into mechanical energy using the DC motor/generator and for converting the mechanical energy into compressed air using the compressed air energy storage equipment. The controller (230) is further configured for re-converting compressed air stored in the compressed air energy storage equipment back into mechanical energy using the DC motor/generator. The energy handling system (100) also includes a DC-AC converter for converting DC electrical energy into AC electrical energy, and is configured for providing DC electrical energy to the DC-AC converter (120) using the compressed air energy storage equipment and the DC motor/generator (210). The energy handling system (100) further comprises at least one DC electrical green energy source (110) connected to the DC motor/generator for driving it as a motor using DC electrical energy.

## Description

### Technical field of the invention

The present invention relates to the field of energy systems, and more specifically to energy storage and conversion technologies for renewable DC electrical energy sources.

### Background of the invention

In recent years, the integration of renewable energy sources into the electrical grid has become increasingly important as the demand for sustainable and eco-friendly energy solutions grows. Renewable energy technologies, such as wind turbines and solar photovoltaic cells, generate direct current (DC) electricity. However, the majority of electrical grids and household appliances operate on alternating current (AC), necessitating the conversion of DC power to AC power through DC-AC converters. DC-AC converters are essential for transforming the variable DC output from renewable energy sources into stable AC electricity suitable for grid distribution. Despite their critical role, these converters often face challenges in efficiently handling the fluctuating nature of renewable energy generation. One significant issue is the inability to capture and utilize peak energy outputs effectively. During periods of optimal conditions-such as intense sunlight for solar panels or strong winds for turbines-the energy generation can exceed the converter's capacity. Standard DC-AC converters may cut off these energy peaks to prevent overloading, leading to a substantial reduction in the total usable energy harvested from renewable sources.

This limitation not only reduces the efficiency of renewable energy systems but also hampers the return on investment for such technologies. The loss of peak energy affects the overall energy supply, especially during high-demand periods when this excess energy could be most beneficial. Additionally, the inconsistent availability of renewable energy due to environmental factors introduces further complexity in balancing supply and demand within the grid.

Managing the variability and optimizing the energy output from DC renewable sources remain pressing challenges. The current methods for energy conversion and storage may not adequately address the inefficiencies caused by peak energy loss and fluctuating generation levels. As the reliance on renewable energy continues to grow, there is a clear need for advancements in technology and systems that can enhance the capture and utilization of energy from these sources.

Therefore, ongoing efforts are crucial to develop solutions that can improve the efficiency of energy conversion from DC to AC, maximize the use of generated renewable energy-including peak outputs-and integrate seamlessly with existing electrical infrastructure. Improvements in this area would significantly contribute to the effectiveness and reliability of renewable energy systems within the global energy landscape.

### Summary of the invention

It is an object of embodiments of the present invention to provide efficient handling of energy from green energy sources. This objective is accomplished by the aspects of the present invention.

In a first aspect, the present invention relates to an energy handling system for handling energy, the energy handling system comprising a DC motor/generator for performing conversion between DC electrical energy and mechanical energy, a compressed air energy storage equipment for performing conversion between mechanical energy and compressed air, the compressed air energy storage equipment using energy exchange units based on a flexible fluid container in a vessel, and a controller configured for converting DC electrical energy into mechanical energy using the DC motor/generator and for converting the mechanical energy into compressed air using the compressed air energy storage equipment.

In embodiments, the DC motor/generator may comprise a permanent magnet DC motor/generator, although embodiments are not limited thereto. This allows for efficient conversion between electrical and mechanical energy.

In embodiments, the controller may be furthermore configured for re-converting compressed air stored in the compressed air energy storage equipment back into mechanical energy using the DC motor/generator. This enables bidirectional energy flow and storage.

In embodiments, the energy handling system may furthermore comprise a DC-AC converter for converting DC electrical energy into alternating current (AC) electrical energy, and the energy handling system may be configured for providing DC electrical energy in controlled amounts to the DC-AC converter using the compressed air energy storage equipment and the DC motor/generator. This allows integration with AC grids.

In embodiments, the energy handling system may furthermore comprise at least one direct current (DC) electrical green energy source connected to the DC motor/generator, for driving the DC motor/generator as motor using DC electrical energy. This enables capturing energy from renewable sources. Such DC electrical green energy sources may be in the field of wind energy, solar energy, wave energy, etc.

In embodiments, the energy handling system may comprise an energy management component configured to monitor peak energy periods from the DC electrical green energy source and prioritize energy storage during these periods. This optimizes energy capture and storage.

In embodiments, the energy management system may be configured for optimizing energy flow between the DC electrical green energy source, the compressed air energy storage equipment, and the DC-AC converter based on the monitored peak energy periods. This balances supply and demand.

In embodiments, the energy management component may be configured for managing capturing and storing of peak energies from the at least one direct current (DC) electrical green energy source and for using stored energy to manage energy supply to the DC-AC converter at moments direct energy generation by the at least one direct current (DC) electrical green energy source is lower than a demand of AC electrical energy that can directly be generated based on the direct energy generation by the at least one direct current (DC) electrical green energy source. This levels out supply fluctuations.

In embodiments, the energy handling system may further comprise a flywheel coupled between the DC motor/generator and the compressed air energy storage equipment. The flywheel may be configured to stabilize short-term fluctuations in mechanical energy transfer between the DC motor/generator and the compressed air energy storage equipment. This smooths energy flow.

In embodiments, the flexible fluid container may be mounted in the vessel so as to form in the first inner compartment a hermetically sealed volume between the outer surface of the flexible fluid container and the vessel, the hermetically sealed volume being configured for being filled with the first substance and the flexible fluid container being configured for being filled with a container fluid. This enables efficient energy exchange.

In embodiments, the area of the vessel that is in contact with the first substance may remain substantially the same during the energy exchange process. This maintains energy transfer efficiency.

In embodiments, the flexible fluid container may be any of a balloon or a bladder. These are simple and effective expandable containers.

In embodiments, the compressed air energy storage equipment may perform conversion to compressed air at a pressure of at least 200 bar, e.g. at least 300 bar, e.g. at least 400 bar. High storage pressures increase energy density.

In embodiments, the compressed air energy storage equipment may furthermore comprise a low-pressure vessel configured for directly providing pressurized air for auxiliary equipment. This enables supplying compressed air for other uses.

In embodiments, the DC motor/generator may be configured for generating an electrical DC signal by conversion from energy stored in the compressed air energy storage equipment and for delivering the electrical DC signal to an electrical DC grid. This allows powering DC equipment.

In a second aspect, the present invention relates to a method for handling energy, the method comprising receiving DC electrical energy from at least one DC electrical energy source, performing conversion between DC electrical energy and mechanical energy using a DC motor/generator, performing conversion between mechanical energy and compressed air using a compressed air energy storage equipment with energy exchange units based on a flexible fluid container in a vessel.

In embodiments, the method may comprise storing the compressed air. This allows energy to be saved for later use.

In embodiments, the method may comprise re-converting, in appropriate amounts, the stored compressed air back into mechanical energy. This enables the stored energy to be extracted as needed.

In embodiments, the method may comprise driving the DC motor/generator with the mechanical energy from the re-converted compressed air to produce DC electrical energy. This converts the stored energy back to electricity.

In embodiments, the method may comprise feeding the DC electrical energy to a DC-AC converter to produce AC electrical energy. This allows powering AC equipment from the stored energy.

In embodiments, the method may further comprise stabilizing energy flow using a flywheel coupled between the DC motor/generator and the compressed air energy storage equipment. The flywheel smooths short-term fluctuations.

In embodiments, the method may further comprise storing compressed air in a high-pressure vessel and using a low-pressure vessel as a source of pressurized gas. This enables both energy storage and compressed air supply.

In embodiments, the method may also comprise monitoring peak energy periods from the DC electrical green energy source and prioritizing energy storage during these periods. This maximizes energy capture.

In embodiments, the method may further comprise adjusting the rate of energy storage and release in response to energy demand fluctuations. This balances supply and demand.

In a third aspect, the present invention relates to a controller for use in an energy handling system, wherein the energy handling system comprises a DC motor/generator and a compressed air energy storage equipment using energy exchange units based on a flexible fluid container in a vessel, the controller being configured to control the conversion of DC electrical energy from the DC electrical green energy source into mechanical energy using the DC motor/generator, and control the conversion of mechanical energy into compressed air using the compressed air energy storage equipment.

In embodiments, the controller may furthermore be configured to control the reconversion, in appropriate amounts, of compressed air stored in the compressed air energy storage equipment back into mechanical energy. This manages energy extraction.

In embodiments, the controller also may be configured to control the DC motor/generator to use the re-converted mechanical energy to produce DC electrical energy. This controls the full energy conversion cycle.

In embodiments, the controller may be configured to feed the DC electrical energy to the DC-AC converter. This integrates with AC equipment.

In embodiments, the controller also may be configured to control delivery of pressurized air from the compressed air energy storage equipment directly to auxiliary systems. This enables compressed air supply.

In embodiments, the controller furthermore may be configured to control delivery of DC current directly from the DC motor/generator upon reconversion of stored compressed air into mechanical energy and DC electrical current to a DC electric current grid. This powers DC equipment.

In embodiments, the controller may be configured to monitor and respond to energy demand fluctuations by adjusting the rate of energy storage and release. This balances supply and demand.

In embodiments, the controller may be configured to monitor peak energy periods from the DC electrical green energy source and prioritize energy storage during these periods. This optimizes energy capture.

In embodiments, the controller may include a user interface for monitoring and adjusting system parameters. This allows operator control and supervision.

In embodiments, the controller may be implemented using a programmable logic controller. This provides flexibility and robustness.

In a fourth aspect, the present invention relates to a compressed air energy storage equipment for storing energy as compressed air, the compressed air energy storage equipment comprising one or more energy exchange units based on a flexible fluid container in a vessel for increasing the pressure at which the compressed air is stored.

In embodiments, in the compressed air energy storage equipment, the flexible fluid container may be mounted in the first inner compartment so as to form in the first inner compartment a hermetically sealed volume between the outer surface of the flexible fluid container and the vessel. The hermetically sealed volume may be configured for being filled with the first substance and the flexible fluid container may be configured for being filled with a container fluid. This configuration enables efficient energy exchange.

In embodiments, the area of the vessel that is in contact with the first substance may remain substantially the same during the energy exchange process. This maintains energy transfer performance.

In embodiments, the flexible fluid container may be any of a balloon or a bladder. These are simple expandable containers.

In embodiments, the flexible fluid container may be arranged in the vessel according to an embodiment described in WO2023148229. This provides one suitable configuration.

In embodiments, the flexible fluid container may alternatively be arranged in the vessel according to an embodiment as described in European patent application EP25152696.8 co-pending herewith. This provides another suitable configuration.

In embodiments, the pressure at which the compressed air may be stored may be at least 200 bar, e.g. at least 300 bar, e.g. at least 400 bar. High pressures increase energy storage density.

In embodiments, the compressed air energy storage may use only a single compression step between the initial pressure and the final pressure at which the air may be stored. This simplifies the system. Furthermore, such a conversion can be done in a very efficient manner.

It is an advantage of embodiments of the present invention that peak energies from DC green energy sources can be captured and utilized, reducing energy loss due to DC-AC converters cutting off peak energies.

Embodiments of systems according to the present invention can make use of high energy efficient exchange units as described in International patent application WO2023148229 or European patent application EP25152696.8 co-pending herewith.

It is an advantage of embodiments of the present invention that stored compressed air can be re-converted into mechanical energy to supply energy in appropriate amounts, managing the energy supply to the DC-AC converter and avoiding loss of peak energies.

Embodiments of the equipment may allow to handle energy conversion and avoid small shocks. Some embodiments allow for providing pressurized air for auxiliary applications. Optimized energy flow between the DC green energy source, the compressed air energy storage equipment, and the DC-AC converter may be obtained by monitoring peak energy periods. The rate of energy storage and release can thereby be adjusted in response to energy demand fluctuations.

Capturing and storing of peak energies from the DC electrical green energy source can be managed appropriately.

Storage capacity and efficiency can be enhanced in systems according to the present invention.

It is an advantage of embodiments of the present invention that efficient energy exchange occurs during compression and expansion processes in the compressed air energy storage equipment, reducing energy loss.

Although there has been constant improvement, change and evolution of devices in this field, the present concepts are believed to represent substantial new and novel improvements, including departures from prior practices, resulting in the provision of more efficient - including more cost efficient -, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 is a schematic diagram of an energy handling system according to embodiments of the present invention.
Fig. 2 is a schematic diagram of a combination of a DC motor/generator and a compressed air energy storage (CAES) equipment according to embodiments of the present invention.
Fig. 3 is a graph illustrating the principle of peak shaving that occurs when converting DC green energy into AC electrical energy for an AC electricity grid and how the use of a DC motor/generator and CAES equipment can reduce losses in the usable energy stemming from DC green energy sources according to embodiments of the present invention.
Fig. 4 is a schematic diagram of part of a system as described in Fig.3, wherein additionally the CAES equipment comprises a relatively low pressure vessel for delivery of pressurized air for auxiliary applications according to embodiments of the present invention.

In the different figures, the same reference signs refer to the same or analogous elements.

### Description of illustrative embodiments

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. The word "comprising" according to the invention therefore also includes as one embodiment that no further components are present. Thus, the scope of the expression "a device comprising means A and B" should not be interpreted as being limited to devices consisting only of components A and B. It means that with respect to the present invention, the only relevant components of the device are A and B.

Similarly, it is to be noticed that the term "coupled", also used in the claims, should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

As used herein, and unless otherwise specified, the term "DC motor/generator" refers to a device capable of operating alternatively as a direct current electric motor and as a direct current electric generator, converting DC electrical energy into mechanical energy when functioning as a motor, and converting mechanical energy into DC electrical energy when functioning as a generator. Examples of DC motor/generators may include permanent magnet DC motors/generators.

As used herein, and unless otherwise specified, the term "compressed air energy storage (CAES) refers to equipment for storing energy in the form of compressed air.

As used herein, and unless otherwise specified, the term "flexible fluid container" may include bladders or balloons. The walls or some of the walls of a flexible fluid container may be elastic, flexible or may be deformable. The term flexible fluid container also may relate to a container wherein some walls are stiff and another wall is elastic, such as for example as being a membrane. The flexible fluid container may expand and contract in volume. It is used within the vessel of an energy exchange unit to facilitate the storage and release of compressed air.

As used herein, and unless otherwise specified, the term "controller" refers to a device or system configured to control and manage the operation of components within the energy handling system, e.g. including the DC motor/generator and the compressed air energy storage equipment. The controller executes conversions between DC electrical energy, mechanical energy, and compressed air as required. Examples may include programmable logic controllers or microprocessor-based systems implementing control algorithms. The controller may be configured for controlling compression and/or expansion processes in such components.

As used herein, and unless otherwise specified, the term "direct current (DC) electrical green energy source" refers to an energy source that generates DC electrical energy from renewable or environmentally friendly resources, such as solar or wind energy. Examples of DC electrical green energy sources include photovoltaic solar panels connected in series and/or parallel configurations, and wind turbines configured to output DC electrical energy.

As used herein, and unless otherwise specified, the term "energy management component" refers to a component or system configured to monitor energy generation and consumption and to control the storage and release of energy within the energy handling system. This includes adjusting operational parameters based on peak energy periods or demand fluctuations to optimize energy flow. Examples may include software modules within the controller that perform functions such as monitoring energy levels, predicting demand, and managing energy distribution.

As used herein, and unless otherwise specified, excess energy and shortcomings in energy are respectively defined as the amount of the energy produced by the DC green energy source that is more than required in the AC energy grid or than can efficiently converted by the DC-AC convertor and as the amount of energy that cannot be produced by the DC green energy source although there is a higher demand in the AC energy grid.

As used herein, and unless otherwise specified, the term "flywheel" refers to a mechanical device that stores rotational kinetic energy, used in the energy handling system to stabilize short-term fluctuations in mechanical energy transfer between the DC motor/generat.or and the compressed air energy storage equipment.

As used herein, and unless otherwise specified, the term "auxiliary equipment" refers to any equipment or devices external to the energy handling system that require pressurized air for operation, which can be supplied directly from the compressed air energy storage equipment. Examples include pneumatic tools, machinery, or systems that utilize compressed air as a power source.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

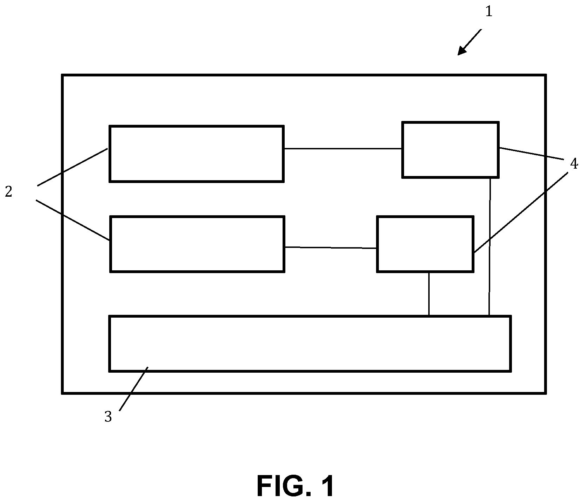

For reasons of illustration, a schematic representation of an exemplary energy handling system 1 as described in WO2023/148229 is first illustrated. General components as described therein, can be used in energy handling systems according to embodiments of the present invention. The exemplary energy handling system 1 is based on one or more energy exchange units 2, which may be based on a balloon in a vessel unit as described in some embodiments in WO2023/148229 or as in European patent application EP25152696.8 co-pending herewith. These energy exchange units 2, may be used for performing compression and/or expansion of a fluid, used in the energy handling action, such as more particularly in the compressed air energy storage system of systems according to the present invention. The energy exchange units may be controlled by a controller 3. Such a controller may comprise any suitable processor. In some embodiments, such a controller may be configured for controlling fluids in the one or more units, for inducing energy exchange. The controller 3 may be programmed for controlling the energy exchange process to occur under substantially isentropic, isobaric, isothermal and/or polytropic conditions, during at least 50% of the energy exchange process, advantageously during at least 60% of the energy exchange process or at least 75% of the energy exchange process or at least 90% of the energy exchange process. It is an advantage of at least some embodiments of the present invention that the conditions under which the energy exchange process can occur can be fully controlled, so that a substantially isothermal process, a substantially isentropic process, a substantially isobaric process, a polytropic process or a combination thereof can be selected and fully controlled. For controlling the fluids in the at least one energy exchange unit 2, the energy handling system 1 may comprise one or more pumping systems 4. It is to be noted that in systems according to embodiments of the present invention, particular temperature and pressure conditions can be maintained in energy exchange units used in the system for inducing an efficient process. The energy handling systems as described according to aspects of the present invention typically may use a configuration comprising the components as described with reference to FIG. 1.

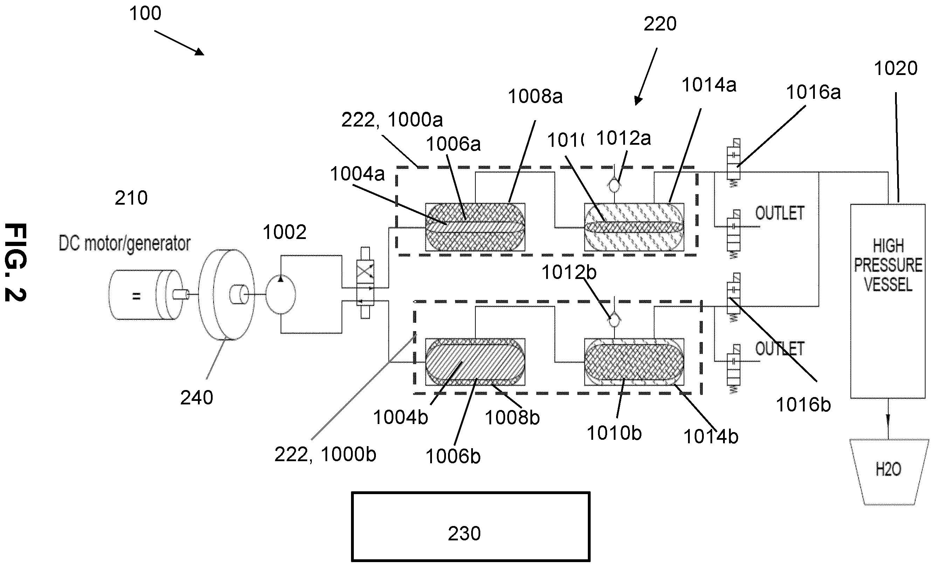

In a first aspect according to the present invention, an energy handling system 100 for handling energy is disclosed, an exemplary system thereof being shown in FIG. 2. According to embodiments, the energy handling system 100 comprises a DC motor/generator 210 for performing conversion between DC electrical energy and mechanical energy and a compressed air energy storage equipment 220 for performing conversion between mechanical energy and compressed air. The compressed air energy storage equipment 220 according to embodiments of the present invention uses energy exchange units 222 based on a flexible fluid container in a vessel. The system also comprises a controller 230 configured for controlling conversion of DC electrical energy into mechanical energy using the DC motor/generator 210 and for controlling the conversion of mechanical energy into compressed air using the compressed air energy storage equipment 220.

Further features and advantages will now be described in more detail with reference to exemplary embodiments.

As described above, in embodiments of the present invention, a DC motor/generator 210 is used. The DC motor/generator 210 may be or comprise a permanent magnet DC motor/generator, although embodiments are not limited thereto. This allows for efficient conversion between electrical and mechanical energy. The DC motor/generator is a device that is capable of operating as a direct current electric motor wherein a direct electric current is used for inducing mechanical energy, e.g. in the form of mechanical movement. On the other hand, the device is also capable of converting mechanical energy into DC electrical energy, the device hence functioning as a generator. According to embodiments of the present invention, the DC motor/generator 210 is coupled to a compressed air energy storage (CAES) equipment 220. The CAES equipment allows for converting mechanical energy into compressed air and vice versa. The CAES equipment 220 comprises different energy exchange units 222 based on a flexible fluid container in a vessel. More particularly, these may for example be energy exchange units 222 referred to as hydraulic balloon vessel interface units as described in examples of WO2023/148229 or may for example be bladder accumulator like energy exchange units as described in European patent application EP25152696.8 which is co-pending herewith or may in other examples be combinations of both types of energy exchange units.

By way of illustration, embodiments of the present invention not being limited thereby, operation of the CAES equipment 210 may in one example be as follows. In FIG. 2, the CAES equipment 210 is shown whereby use is made of different energy exchange units based on flexible fluid containers in vessels for storing or releasing energy as compressed air.

Typically, for safety reasons, the energy exchange units make use of an additional vessel creating a fluid/fluid interface to avoid possible dangerous situations whereby a first fluid leaks into a second fluid, whereby the first fluid and the second fluid are reactive with each other. Since this is typically the case for air and oil (interaction being known as the diesel effect) and since in the simplest compression and expansion systems used these reactive fluids would only be separated by the wall formed by the balloon, the implementation of an additional fluid/fluid interface, e.g. a liquid/liquid interface, is used herein and overcomes this issue.

The exemplary compressed air energy storage equipment 220 in FIG. 2 shows the use of two energy exchange units (222, 1000a, 1000b), each energy exchange unit being based on two flexible fluid containers in vessels for creating and oil/water/air interface. In the energy exchange unit 1000a, mechanical energy coming from the DC motor/generator 210 is used for controlling pumping with a pumping system 1002 of first oil 1004a in the first balloon 1006a resulting of an increased pressure in the volume between the outer side of the first balloon 1006a and the first vessel 1008a. the volume between the outer side of the first balloon 1006a and the first vessel 1008a is in hydraulic connection with the second balloon 1010a in the second flexible fluid container in vessel. Hence the second fluid, typically water, being present between the outer side of the first balloon 1006a and the first vessel 1008a and in the second balloon 1010a is transferred fully to the second balloon 1010a, resulting in the second balloon 1010a being expanding. Air that has been introduced - via a first inlet valve 1012a in the second vessel 1014a - between the outer surface of the second balloon 1010a and the second vessel 1014a, hence is compressed. By controlling a first outlet valve 1016a towards a high pressure vessel, the compressed air can be stored in the high pressure vessel 1020. A similar process occurs alternatingly in the corresponding energy exchange unit 1000b, second oil 1004b, third balloon 1006b, third vessel 1008b, fourth balloon 1010b, second inlet valve 1012b and fourth vessel 1014b and second outlet valve 1016b.

The compressed air is hence made by controllably filling the second respectively fourth vessel with fluid, e.g. air, via the inlet, closing the inlet valves and compressing the air. The compressed air then may be transferred to a high pressure vessel 1020, by controlling the outlet valves.

The system also allows for the opposite action, i.e. it can be operated as an expander. By providing an amount of highly compressed air from the high pressure vessel in the second and fourth vessel and allowing this compressed air to expand, movement of the oil in the balloon can be induced, resulting in mechanical energy which can be converted again by the DC motor/generator 210 in electricity.

Whereas the example shown is explained with respect to a balloon in vessel based energy exchange unit, other flexible fluid container in vessel based energy exchange units also may be used, as described elsewhere in the present application. Furthermore, whereas reference is made to air also another gas could be used. Also the specific fluids mentioned above do not need to be restricted to those of this example.

Furthermore, the system typically also comprises a number of additional components such as safety valves, outlets, sensors like pressure sensors, fluid reservoir(s), etc. which are within the knowledge of the skilled person.

The operation as compressor and/or expander and hence of the DC motor/generator typically is controlled by a controller 230. This controller controls the process of converting mechanical energy into compressed air and re-converting compressed air stored in the compressed air energy storage equipment back into mechanical energy using the DC motor/generator 210, thus enabling bidirectional energy flow and storage.

Embodiments of the present invention are especially suitable for managing energy production from green DC energy sources such as for example wind-based energy sources like wind mills or solar-based energy sources like solar panels. Moreover, the system may be especially suitable when including a DC-AC converter, since in a large number of countries most applications are using alternating current electrical energy and hence one is especially interested in efficiently converting DC electrical energy, e.g. from green DC energy sources, in AC electrical energy.

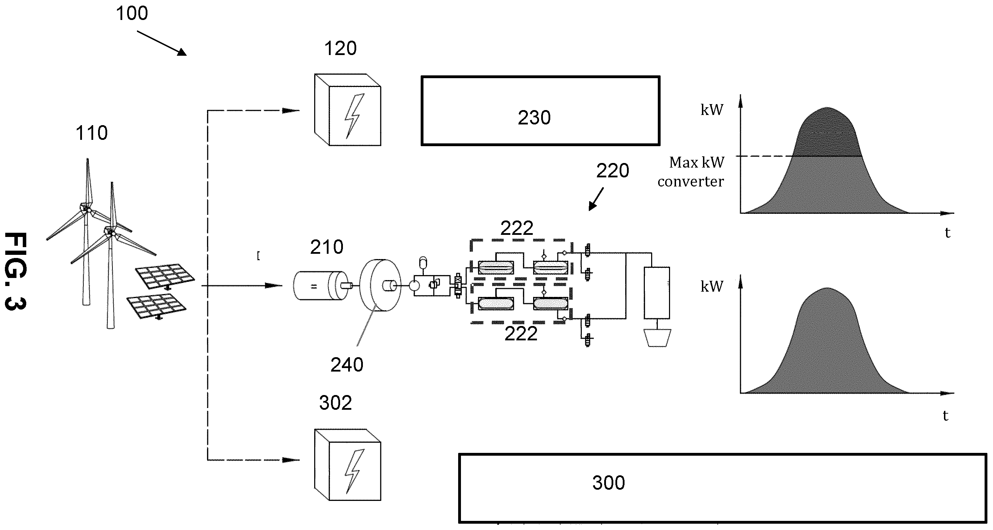

Embodiments of the present invention assist in efficiently converting DC electrical energy into AC electrical energy. The latter will be illustrated with reference to FIG. 3. The exemplary energy handling system 100 of FIG. 3 shows at least one direct current (DC) electrical green energy source 110 to the AC electrical grid via a DC-AC converter 120 for converting DC electrical energy into alternating current (AC) electrical energy. Between the DC electrical green energy source 110 and the DC-AC converter 120, according to embodiments of the present invention, a combination of a DC motor/generator 210 and a compressed air energy storage equipment 220 as described with respect to FIG. 2 is introduced.

The energy handling system 100 hence may be configured for providing DC electrical energy in controlled amounts to the DC-AC converter 120 using the compressed air energy storage equipment 220 and the DC motor/generator 210, to temporary store and/or provide DC electrical energy. Whether DC energy needs to be stored or additionally provided depends on the generation of DC energy by the green DC energy source 110, the demand in the AC grid, the capacity of the DC-AC converter and optionally also other demands, such as the use of DC energy directly in applications (so without the need for converting it to AC energy) or the use of pressurized air in auxiliary applications.

In order to control the energy handling, excess and shortcomings need to be known, whereby excess can be created by the DC green energy source producing more than is required in the AC energy grid or than can efficiently converted by the DC-AC convertor. Shortcomings occur when the DC green energy source is producing less than is demanded in the AC energy grid. In the latter case, energy previously stored as compressed air can be released by the system and re-converted in DC electrical energy that can be provided to the DC-AC convertor so that the shortcomings can be compensated for.

In order to perform this optimisation, the energy handling system 100 may comprise an energy management component 300 configured to monitor energy generation of the DC electrical energy green source 110, such as for example monitor peak energy periods from the DC electrical green energy source 110, and prioritize energy storage during these periods. Such a system may have appropriate sensors or information sources for obtaining information regarding the production of energy by the DC green energy sources on the one hand and the demand in energy, such as DC electrical power, AC electrical power, pressurized air, ...) on the other hand. As shown in FIG. 3, the principle of peak shaving (avoiding loss of DC electrical energy that cannot be efficiently converted by the DC-AC convertor) occurs when converting DC green energy into AC electrical energy for an AC electricity grid. The graph shows the DC electrical energy generated by a green energy source 110 over time, with peaks and valleys. When this DC energy is directly converted to AC energy using a DC-AC converter 120, the peak energies are typically cut off, resulting in a loss of usable energy. By employing the DC motor/generator 210 and CAES equipment 220, the peak energies can be captured, stored as compressed air, and later reconverted to DC electrical energy to supplement the valleys, thereby reducing the overall energy loss.

The energy management system 300 may thus be configured for optimizing energy flow between the DC electrical green energy source 110, the compressed air energy storage equipment 220, and the DC-AC converter 120 based on the monitored peak energy periods. This balances supply and demand. The energy management component 300 thus may be configured for managing capturing and storing of peak energies from the at least one direct current (DC) electrical green energy source 110 and for using stored energy to manage energy supply to the DC-AC converter 120 at moments direct energy generation by the at least one direct current DC electrical green energy source 110 is lower than a demand of AC electrical energy that can directly be generated based on the direct energy generation by the at least one direct current (DC) electrical green energy source 110. This levels out supply fluctuations.

In embodiments, the energy handling system 100 may further comprise a flywheel coupled between the DC motor/generator 210 and the compressed air energy storage equipment 220. The flywheel may be configured to stabilize short-term fluctuations in mechanical energy transfer between the DC motor/generator 210 and the compressed air energy storage equipment 220. This smooths energy flow.

In embodiments, the flexible fluid container may be mounted in the first inner compartment so as to form in the vessel a hermetically sealed volume between the outer surface of the flexible fluid container and the vessel, the hermetically sealed volume being configured for being filled with the first substance and the flexible fluid container being configured for being filled with a container fluid.

In embodiments, the area of the vessel that is in contact with the first substance may remain substantially the same during the energy exchange process. This maintains energy transfer efficiency. Where in embodiments of the present invention reference is made to the surface area of the vessel into contact with the first substance being substantially the same during the energy exchange process, this means that at least during 90% (for example during 95% or during 98%) of the time of energy exchange in the system, the surface area of the vessel that is in contact with the first substance varies less than 10% (for example varies less than 5%, for example less than 2%). In embodiments, the flexible fluid container may be any of a balloon or a bladder. These are simple and effective expandable containers.

In embodiments, the compressed air energy storage equipment 220 may perform conversion to compressed air at a pressure of at least 200 bar, e.g., at least 300 bar, e.g., at least 400 bar. High storage pressures increase energy density.

In embodiments, the DC motor/generator 210 may be configured for generating an electrical DC signal by conversion from energy stored in the compressed air energy storage equipment 220 and for delivering the electrical DC signal to an electrical DC grid. This allows powering DC equipment. FIG. 3 shows the possibility of incorporating direct delivery of DC energy 302 for auxiliary applications.

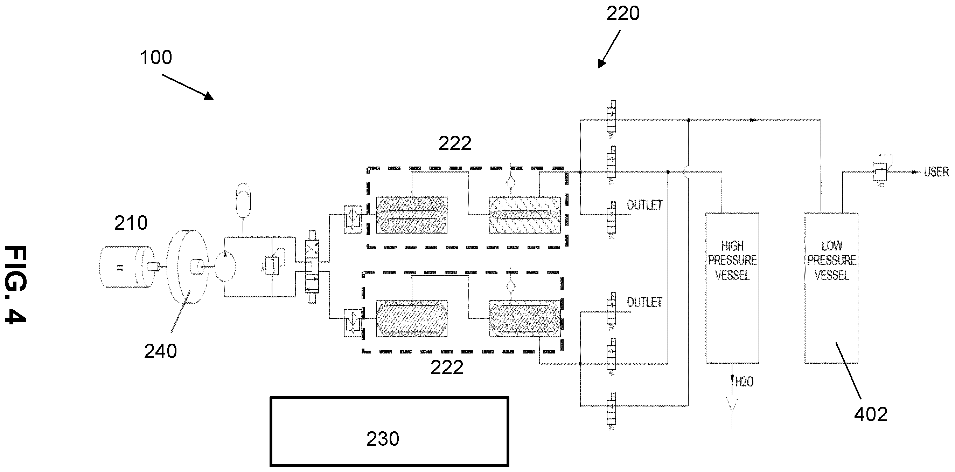

As illustrated in Figure 4, which shows a system where the CAES equipment 220 comprises a relatively low-pressure vessel for delivery of pressurized air for auxiliary applications. The high-pressure vessel in the CAES equipment 220 is used for storing energy as compressed air at high pressures, while the low-pressure vessel provides a source of pressurized air that can be directly used for auxiliary applications without the need for reconversion to mechanical or electrical energy. FIG. 4 indicates the low pressure vessel 402.

In a second aspect, the present invention relates to a method for handling energy. The method may be performed using a system as described in FIG. 2 to FIG. 4, although embodiments are not limited thereto. The method comprises receiving DC electrical energy from at least one DC electrical energy source 110, performing conversion between DC electrical energy and mechanical energy using a DC motor/generator 210, performing conversion between mechanical energy and compressed air using a compressed air energy storage equipment 220 with energy exchange units 222 based on a flexible fluid container in a vessel. In embodiments, the method may comprise storing the compressed air. This allows energy to be saved for later use. Other features and advantages may correspond with those of the first aspect wherein the functionality of components of embodiments of the first aspect may correspond with method steps of the method of the second aspect.

In a third aspect, the present invention relates to a controller for use in an energy handling system, wherein the energy handling system comprises a DC motor/generator 210 and a compressed air energy storage equipment 220 using energy exchange units 222 based on a flexible fluid container in a vessel, the controller being configured to control the conversion of DC electrical energy from the DC electrical green energy source 110 into mechanical energy using the DC motor/generator 210, and control the conversion of mechanical energy into compressed air using the compressed air energy storage equipment 220. Such a controller 230 may include a user interface for monitoring and adjusting system parameters. This allows operator control and supervision. It may be implemented using a programmable logic controller. This provides flexibility and robustness. It may be combined with or implemented in an energy management system as described in the first aspect.

In a fourth aspect, the present invention relates to a compressed air energy storage equipment 220 for storing energy as compressed air, the compressed air energy storage equipment 220 comprising one or more energy exchange units 222 based on a flexible fluid container in a vessel for increasing the pressure at which the compressed air is stored. In embodiments, the flexible fluid container may be arranged in the vessel according to an embodiment described in WO2023148229. This provides one suitable configuration. In embodiments, the flexible fluid container may alternatively be arranged in the vessel according to an embodiment as described in European patent application 25152696.8 co-pending herewith. This provides another suitable configuration. In embodiments, the pressure at which the compressed air may be stored may be at least 200 bar, e.g., at least 300 bar, e.g., at least 400 bar. High pressures increase energy storage density. In embodiments, the compressed air energy storage 220 may use only a single compression step between the initial pressure and the final pressure at which the air may be stored. This simplifies the system. An example of a principle of operation of the CAES system has been given with reference to FIG. 2 described above.

It is to be understood that although preferred embodiments, specific constructions and configurations, as well as materials, have been discussed herein for devices according to the present invention, various changes or modifications in form and detail may be made without departing from the scope of this invention. For example, any formulas given above are merely representative of procedures that may be used. Functionality may be added or deleted from the block diagrams and operations may be interchanged among functional blocks. Steps may be added or deleted to methods described within the scope of the present invention.

### List of Reference Numbers

100 - energy handling system
110 - at least one direct current (DC) electrical green energy source
120 - DC-AC converter
210 - DC motor/generator
220 - compressed air energy storage equipment
222 - energy exchange units
230 - controller
240 - flywheel
300 - energy management component
302 - direct delivery of DC energy
402 - low pressure vessel
1002 - pumping system
1004a,b - first oil, second oil
1006a,b - first balloon, third balloon
1008a,b - first vessel, third vessel
1010a,b - second balloon, fourth balloon
1012a,b - first inlet valve, second inlet valve
1014a,b - second vessel, fourth vessel
1016a,b - first outlet valve, second outlet valve
1020 - high pressure vessel

## Claims

1. An energy handling system (100) for handling energy, the energy handling system (100) comprising
- a DC motor/generator (210) for performing conversion between DC electrical energy and mechanical energy,
- a compressed air energy storage equipment (220) for performing conversion between mechanical energy and compressed air, the compressed air energy storage equipment (220) using energy exchange units (222) based on a flexible fluid container in a vessel, and
- a controller configured (230) for converting DC electrical energy into mechanical energy using the DC motor/generator (210) and for converting the mechanical energy into compressed air using the compressed air energy storage equipment (220).

2. The energy handling system (100) according to claim 1, wherein the controller (230) is furthermore configured for re-converting compressed air stored in the compressed air energy storage equipment (220) back into mechanical energy using the DC motor/generator (210).

3. The energy handling system (100) according to claim 2, wherein the energy handling system (100) furthermore comprises a DC-AC converter (120) for converting DC electrical energy into alternating current (AC) electrical energy, and wherein the energy handling system (100) is configured for providing DC electrical energy in controlled amounts to the DC-AC converter (120) using the compressed air energy storage equipment (220) and the DC motor/generator (210).

4. The energy handling system (100) according to any of the previous claims, wherein the energy handling system (100) furthermore comprises at least one direct current (DC) electrical green energy source (110) connected to the DC motor/generator (210), for driving the DC motor/generator (210) as motor using DC electrical energy.

5. The energy handling system (100) according to claim 4 in as far as dependent on claim 3, wherein the energy handling system (100) comprises an energy management component (300) configured to monitor peak energy periods from the DC electrical green energy source and prioritize energy storage during these periods.

6. The electrical energy system according to claim 5, wherein the energy management system (300) is configured for optimizing energy flow between the DC electrical green energy source, the compressed air energy storage equipment, and the DC-AC converter based on the monitored peak energy periods.

7. The energy handling system (100) according to claim 6, wherein the energy management component (300) is configured for managing capturing and storing of peak energies from the at least one direct current (DC) electrical green energy source and for using stored energy to manage energy supply to the DC-AC converter at moments direct energy generation by the at least one direct current (DC) electrical green energy source is lower than a demand of AC electrical energy that can directly be generated based on the direct energy generation by the at least one direct current (DC) electrical green energy source.

8. The energy handling system (100) according to any of the previous claims, the energy handling system (100) further comprising a flywheel coupled between the DC motor/generator (210) and the compressed air energy storage equipment (220).

9. The energy handling system (100) according to any of the previous claims, wherein the flexible fluid container is being mounted in the vessel so as to form in the vessel a hermetically sealed volume between the outer surface of the flexible fluid container and the vessel, the hermetically sealed volume being configured for being filled with the first substance and the flexible fluid container being configured for being filled with a container fluid.

10. The energy handling system (100) according to claim 9, wherein the area of the vessel that is in contact with the first substance remains substantially the same during the energy exchange process.

11. An energy handling system (100) according to any of claims 9 or 10, wherein the flexible fluid container is any of a balloon or a bladder.

12. An energy handling system (100) according to any of the previous claims, wherein the compressed air energy storage equipment (220) for performing conversion to compressed air at a pressure of at least 200 bar, e.g. at least 300 bar, e.g. at least 400 bar.

13. The electrical energy system (100) according to any one of the previous claims, wherein the compressed air energy storage equipment furthermore comprises a low-pressure vessel configured for directly providing pressurized air for auxiliary equipment.

14. The electrical energy system (100) according to any one of the previous claims, wherein the electrical energy system (100) according to any one of the previous claims, wherein the DC motor/generator is configured for generating an electrical DC signal by conversion from energy stored in the compressed air energy storage equipment and for delivering the electrical DC signal to an electrical DC grid.

15. A method for handling energy, the method comprising
- receiving DC electrical energy from at least one DC electrical energy source,
- performing conversion between DC electrical energy and mechanical energy using a DC motor/generator
- performing conversion between mechanical energy and compressed air using a compressed air energy storage equipment (220) with energy exchange units (222) based on a flexible fluid container in a vessel.
